(19) Europäisches Patentamt
European Patent Office
Office européen des brevets

(11) Veröffentlichungsnummer: **0 083 009 A1**

(12) # EUROPÄISCHE PATENTANMELDUNG

(21) Anmeldenummer: 82111518.5

(22) Anmeldetag: 11.12.82

(51) Int. Cl.³: C 09 B 29/08
C 09 B 31/043
//D06P1/18, D06P3/54

(30) Priorität: 28.12.81 DE 3151535

(43) Veröffentlichungstag der Anmeldung: 06.07.83 Patentblatt 83/27

(84) Benannte Vertragsstaaten: CH DE FR GB IT LI

(71) Anmelder: BASF Aktiengesellschaft
Carl-Bosch-Strasse 38
D-6700 Ludwigshafen(DE)

(72) Erfinder: Becker, Ernst, Dr.
Fichtestrasse 18
D-6700 Ludwigshafen(DE)

(72) Erfinder: Bergmann, Udo, Dr.
Merckstrasse 26
D-6100 Darmstadt(DE)

(72) Erfinder: Dix, Johannes, Peter, Dr.
Ludwigshafener Strasse 125
D-6708 Neuhofen(DE)

(72) Erfinder: Hansen, Guenter, Dr.
Alwin-Mittasch-Platz 8
D-6700 Ludwigshafen(DE)

(54) **Dispersionsfarbstoffe.**

(57) Die Erfindung betrifft Verbindungen der allgemeinen Formel I

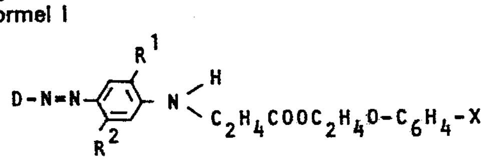

I,

in der
D der Rest einer Diazokomponente,
$R^1$ Wasserstoff, Methyl, Ethyl, Methoxy oder Ethoxy,
$R^2$ Wasserstoff, Chlor, Methyl, Methoxy, $NHSO_2$-$C_1$- bis -$C_4$-alkyl oder C-Acylamino und
X Wasserstoff, Methyl, Ethyl, Chlor, Brom oder Nitro sind.

Die erfindungsgemäßen Verbindungen eignen sich insbesondere zum Färben synthetischer Polyester.

EP 0 083 009 A1

Dispersionsfarbstoffe

Die Erfindung betrifft Verbindungen der allgemeinen Formel I

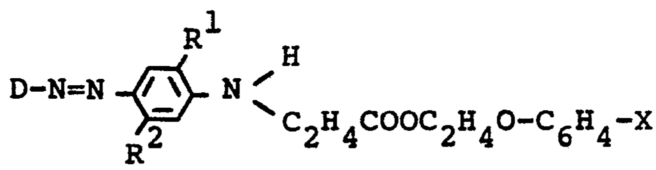
I,

in der
D der Rest einer Diazokomponente,
$R^1$ Wasserstoff, Methyl, Ethyl, Methoxy oder Ethoxy,
$R^2$ Wasserstoff, Chlor, Methyl, Methoxy, $NHSO_2-C_1-$ bis $-C_4-$alkyl oder C-Acylamino und
X Wasserstoff, Methyl, Ethyl, Chlor, Brom oder Nitro sind.

C-Acylaminoreste $R^2$ sind im einzelnen beispielsweise NHCHO oder $NHCOC_6H_5$ und vorzugsweise $NHCOCH_3$ oder $NHCOC_2H_5$.

Zur Herstellung der Verbindungen der Formel I kann man Diazoniumverbindungen von Aminen der Formel

$$D-NH_2$$

in an sich bekannter Weise mit Kupplungskomponenten der Formel

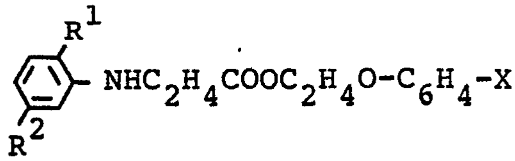

umsetzen.

Bg/P

Die Verbindungen der Formel I eignen sich insbesondere zum Färben von synthetischen Polyestern, auf denen man echte Färbungen mit insbesondere hohen thermischen Echtheiten erhält.

Die Reste D der Diazokomponenten leiten sich beispielsweise von Aminen der Benzol-, Thiazol-, Isothiazol-, Benzthiazol-, Benzisothiazol-, Thiadiazol- oder Thiophenreihe ab.

Als Substituenten für die Benzolderivate kommen insbesondere Nitro, Chlor, Brom, Methyl, Cyan, Methylsulfonyl, Ethylsulfonyl, Phenylazo oder Carbonester in Betracht, in der heterocyclischen Reihe sind vorzugsweise Nitro, Cyan, Chlor, Brom, Methyl, Phenyl, Benzyl oder Carbonester zu nennen.

Einzelne Diazokomponenten sind beispielsweise:
Anilin, o-, m- oder p-Toluidin, o-, m- oder p-Methylsulfonylanilin, o-, m- oder p-Nitroanilin, o-, m- oder p-Cyananilin, o-, m- oder p-Chloranilin, o-, m- oder p-Bromanilin, 3,4-Dichloranilin, 2,5-Dichloranilin, 3,5-Dichloranilin, 2,4,5-Trichloranilin, 2,4,6-Trichloranilin, 2,4,6-Tribromanilin, 2,4-Dicyananilin, 2,5-Dicyananilin, 2-Cyan-4-chloranilin, 2-Cyan-4-chlor-6-bromanilin, 2-Cyan-4,6-dichloranilin, 2-Cyan-4,6-dibromanilin, 2,4-Dicyan-6-chloranilin, 2-Chlor-4-cyananilin, 2,6-Dichlor-4-cyananilin, 2-Nitro-4-chloranilin, 2-Nitro-4-methylanilin, 2-Methyl-4-nitroanilin, 2-Methoxy-4-nitroanilin, 2-Nitro-4-methoxyanilin, 2-Chlor-4-nitroanilin, 2-Brom-4-nitroanilin, 2,5-Dichlor-4-nitroanilin, 2,6-Dichlor-4-nitroanilin, 2,6-Dibrom-4-nitroanilin, 2-Chlor-4-nitro-6-bromanilin, 2,4-Dinitroanilin, 2,4-Dinitro-6-chloranilin, 2,4-Dinitro-6-bromanilin, 2,4-Dinitro-6-cyananilin, 2,6-Dicyan-4-nitroanilin, 2-Methylsulfonyl-4-chloranilin, 2-Chlor-4-methylsulfonylanilin, 2-Methylsulfonyl-4-nitroanilin, 2-Nitro-4-ethylsulfonylanilin, 2,4-Dinitro-6-methylsulfonylanilin, 2-Cyan-4-methylsulfonylanilin, 2-Methylsulfonyl-4-nitro-6-bromanilin, 2-Methylsulfonyl-4-nitro-6-chloranilin, 2,6-Dichlor-4-methylsulfonylanilin, 2,6-Dibrom-4-methylsulfonylanilin, 2,6-Dicyan-4-methylsulfonylanilin, 2,6-Dicyan-4-methylanilin, 4-Nitroanthranilsäuremethylester, 4-Aminoazobenzol, 2',3-Dimethyl-4-aminoazobenzol, 3',2-Dimethyl-4-aminoazobenzol, 2-Methyl-5-methoxy-4-aminoazobenzol, 4'-Chlor-4-aminoazobenzol, 2,3'-Dichlor-4-aminoazobenzol, 2'- oder 3'-Chlor-4-aminoazobenzol, 3-Amino-2,1-benzisothiazol, 3-Amino-5-chlor-2,1-benzisothiazol, 3-Amino-5-brom-2,1-benzisothiazol, 3-Amino-5-nitro-2,1-benzisothiazol, 3-Amino-5-nitro-7-chlor-2,1-benzisothiazol, 3-Amino-5-nitro-7-brom-2,1-benzisothiazol, 3-Amino-5,7-dichlor-benzisothiazol, 3-Amino-5,7-dibrom-benzisothiazol, 2-Aminothiazol, 2-Amino-5-nitrothiazol, 2-Amino-4-methyl-5-nitrothiazol, 2-Amino-4-phenyl-5-nitrothiazol, 5-Amino-4-cyan-3-methylisothiazol, 5-Amino-4-cyan-3-ethylisothiazol, 5-Amino-4-cyan-3-n- und -i-propyl-isothiazol, 5-Amino-3-butyl-4-cyanisothiazol, 5-Amino-4-cyan-3-phenylisothiazol, 2-Amino-5-phenyl-1,3,4-thiadiazol, 2-Amino-5-ethylmercapto-1,3,4-thiadiazol, 3-Phenyl-5-amino-1,2,4-thiadiazol, 3-ß-Carbomethoxyethylmercapto-5-amino-1,2,4-thiadiazol, 3-(Methyl-, Ethyl-, Butyl- oder Benzyl)-mercapto-5-amino-1,2,4-thiadiazol, 2-Aminobenzthiazol, 2-Amino-6-methylbenzthiazol, 2-Amino-6-(methoxy-, ethoxy- oder butoxy)-benzthiazol, 2-Amino-6-cyanbenzthiazol, 2-Amino-6-thiocyanatobenzthiazol, 2-Amino-6-thiocyanato-

benzthiazol, 2-Amino-4-cyan-6-nitrobenzthiazol, 2-Amino-4,6-dinitrobenzthiazol, 2-Amino-6-nitrobenzthiazol, 2-Amino-5,6-dichlorbenzthiazol, 2-Amino-6,7-dichlorbenzthiazol, 2-Amino-(4 oder 6)-methylsulfonylbenzthiazol, 7-Nitro-4-amino-1,2-benzisothiazol, 7-Nitro-5-brom-4-amino-1,2-benzisothiazol, 7-Nitro-5-chlor-4-amino-1,2-benzisothiazol, 7-Nitro-5-cyan-4-amino-1,2-benzisothiazol, 3-Amino-5-nitro-isothiazolothiophen, 2-Amino-3-nitro-4-methylsulfonylthiophen, 2-Amino-3,5-dinitrothiophen, 2-Amino-3-cyan-5-nitrothiophen, 2-Amino-5-nitrothiophen, 2-Amino-3,5-dicyan-4-methylthiophen, 5-Amino-3-methylisothiazol oder 5-Amino-3-benzyl-4-cyanisothiazol.

Von besonderer Bedeutung sind Verbindungen der Formel I a

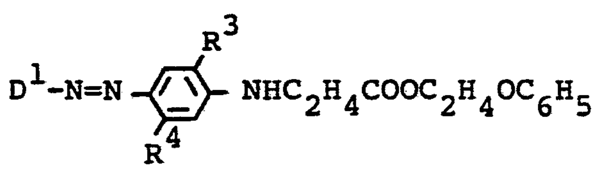 I a,

in der

$R^3$ Wasserstoff, Methyl, Methoxy oder Ethoxy,

$R^4$ Wasserstoff, Methyl, Methoxy, Chlor, Acetylamino oder Methylsulfonylamino und

$D^1$ ein Rest der Benzol-, Isothiazol-, Thiazol-, Thiadiazol-, Benzisothiazol- oder Thiophenreihe sind.

Bevorzugt sind z. B. durch Chlor, Brom, Nitro, Cyan, Methyl oder $C_1$- bis $C_8$-Alkoxycarbonyl substituiertes Phenyl, durch $C_1$- bis $C_4$-Alkyl, Benzyl oder Phenyl substituiertes Isothiazolyl, durch Methyl, Phenyl, Cyan oder $C_1$- bis $C_8$-Alkoxycarbonyl substituiertes Thiazolyl, durch $C_1$- bis $C_4$-Alkylmercapto, $C_1$- bis $C_4$-Alkyl oder Phenyl substituiertes

Thiadiazolyl, durch Nitro, Chlor, Brom oder Cyan substituiertes Benzisothiazolyl oder durch Cyan, $C_1$- bis $C_4$-Alkyl, Nitro oder $C_1$- bis $C_8$-Alkoxycarbonyl substituiertes Thienyl.

In den folgenden Beispielen beziehen sich Angaben über Teile und Prozente, sofern nicht anders vermerkt, auf das Gewicht.

Beispiel 1

13,8 Teile 4-Nitroanilin wurden in 250 Teilen Wasser und 20 Teilen 32 %iger Salzsäure fein suspendiert und bei 0 bis 5 °C mit einer Lösung von 7 Teilen Natriumnitrit in 20 Teilen Wasser versetzt. Die resultierende Diazolösung wurde 3 Stunden nachgerührt und dann filtriert. Nach Entfernung von überschüssigem Nitrit mit Amidosulfonsäure wurde die Lösung anschließend mit 400 Teilen Eis und 100 Teilen 32 %iger Salzsäure versetzt.

34,2 Teile N-[ß-(ß'-Phenoxyethoxy)-carbonylethyl)]-3-amino-acetanilid wurden in 200 Teilen Dimethylformamid gelöst und innerhalb von 2 Stunden bei 0 °C zur Diazolösung zugegeben. Nach beendeter Kupplung wurde die Farbstoffsuspension auf 60 °C erhitzt, filtriert, der Farbstoff mit Wasser neutral gewaschen und getrocknet. Man erhielt 48 Teile des Farbstoffs der Formel

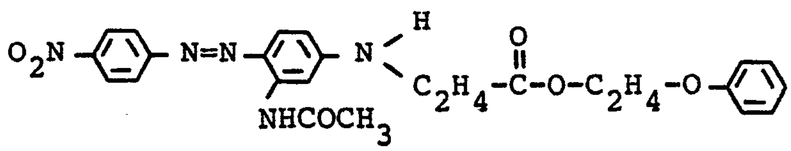
,

der auf Polyesterfasern gelbstichig rote Färbungen mit guten Echtheiten ergibt, von denen die hohe Thermofixierechtheit hervorzuheben ist.

Beispiel 2

17,2 Teile 2-Chlor-4-nitroanilin wurden in 200 Teilen Wasser und 60 Teilen 32 %iger Salzsäure suspendiert und bei 0 °C durch Zugabe einer Lösung von 7 Teilen Natriumnitrit in 20 Teilen Wasser diazotiert. Die Diazolösung wurde filtriert und nach Zugabe von 400 Teilen Eis und 100 Teilen 32 %iger Salzsäure bei 0 °C innerhalb 2 Stunden mit einer Lösung von 34,2 Teilen N-[ß-(ß'-Phenoxyethoxy)-carbonylethyl]-3-amino-acetanilid versetzt. Nach Ende der Kupplung wurde die Suspension auf 60 °C erhitzt, filtriert, der Farbstoff mit Wasser neutral gewaschen und getrocknet. Man erhielt 48,5 Teile des Farbstoffs der Formel

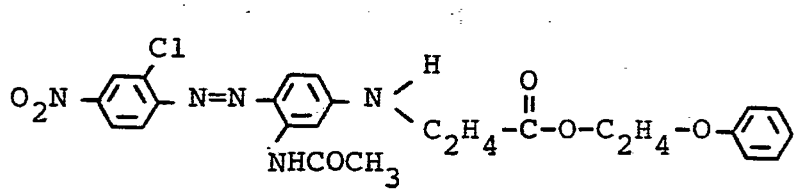
,

mit dem auf Polyesterfasern intensive Rotfärbungen mit insbesondere hervorragender Thermofixierechtheit erhalten werden.

Beispiel 3

21,7 Teile 2-Chlor-4,6-dinitroanilin wurden in 100 Teilen 96 %iger Schwefelsäure gelöst, bei 5 - 10 °C mit 32 Teilen Nitrosylschwefelsäure (11,5 % $N_2O_3$) diazotiert und 16 Stunden bei 10 - 15 °C nachgerührt.

37,2 Teile N-[ß-(ß'-Phenoxyethoxy)-carbonylethyl]-2-amino-4-acetanisidin wurden in 250 Teilen Dimethylformamid gelöst, in eine Mischung aus 60 Teilen 32 %iger Salzsäure und 300 Teilen Wasser eingerührt und mit 400 Teilen Eis versetzt. Anschließend ließ man bei 0 - 5 °C die Diazoniumsalzlösung zulaufen. Nach beendeter Kupplung wurde die Suspension auf 40 °C aufgeheizt, der Farbstoff abfiltriert, mit Wasser neutral gewaschen und getrocknet. Man erhielt 52,5 Teile des Farbstoffs der Formel

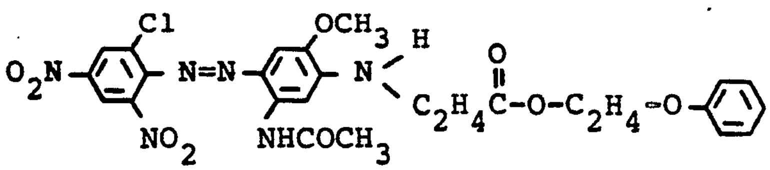 ,

der auf Polyesterfasern marineblaue Färbungen mit sehr guter Thermofixierechtheit und guter Lichtechtheit liefert.

Beispiel 4

13,9 Teile 5-Amino-4-cyano-3-methylisothiazol wurden in 150 Teilen Essigsäure/Propionsäure 3 : 1 gelöst, bei 0 bis 5 °C mit 32 Teilen Nitrosylschwefelsäure (11,5 % $N_2O_3$) umgesetzt und 4 Stunden nachgerührt.

39,2 Teile N-[ß-(ß'-Phenoxyethoxy)-carbonylethyl]-2-methyl-5-methylsulfonylamino-anilin wurden in 250 Teilen Dimethylformamid gelöst, in 60 Teile 32 %ige Salzsäure und 300 Teile Wasser eingerührt und mit 400 Teilen Eis versetzt. Anschließend wurde bei 0 - 5 °C die Diazolösung zugefügt und bis zur beendeten Kupplung gerührt. Der Farbstoff wurde bei Raumtemperatur abgesaugt, neutral gewaschen und getrocknet. Man isolierte 46 Teile des Farbstoffs der Formel

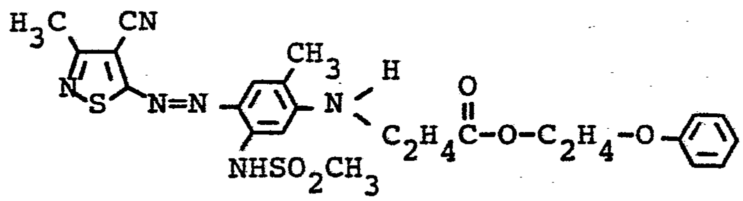 ,

der auf Polyesterfasern blaustichig rote Färbungen mit sehr guter Licht- und Thermofixierechtheit ergibt.

Beispiel 5

In 100 Teile 85 %ige Schwefelsäure wurden bei 10 - 15 °C 19,5 Teile 3-Amino-5-nitro-2,1-benzisothiazol eingetragen, die resultierende Lösung bei 0 - 5 °C mit 32 Teilen Nitrosylschwefelsäure versetzt und 3 Stunden bei 0 - 5 °C nachgerührt.

Eine Lösung von 31,3 Teilen 2,5-Dimethyl-N-[ß-(ß'-Phenoxyethoxy)-carbonylethyl]-anilin in 200 Teilen Dimethylformamid wurde in eine Mischung aus 300 Teilen Wasser, 60 Teilen 32 %iger Salzsäure und 400 Teilen Eis eingerührt und danach bei 0 - 5 °C mit der Diazolösung versetzt. Nach Ende der Kupplung wurde die Farbstoffsuspension bei 40 °C

abgesaugt, mit Wasser neutral gewaschen und der Farbstoff getrocknet. Man isolierte 46,5 Teile des Farbstoffs der Formel

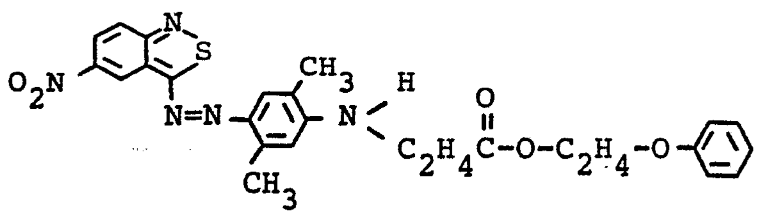,

der Polyesterfasern in gut licht- und thermofixierechten marineblauen Tönen färbt.

Analog zu den beschriebenen Methoden erhielt man auch die in den folgenden Tabellen gekennzeichneten Verbindungen.

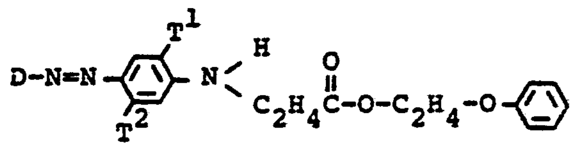

| Beispiel Nr. | D | $T^1$ | $T^2$ | Färbung auf Polyester |
|---|---|---|---|---|
| 6 | 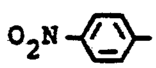 | $CH_3$ | $CH_3$ | scharlachrot |
| 7 | 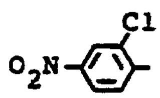 | $CH_3$ | $CH_3$ | rot |
| 8 | 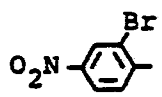 | $CH_3$ | $CH_3$ | rot |
| 9 | 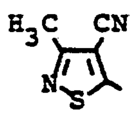 | $CH_3$ | $CH_3$ | blaustichig rot |
| 10 | 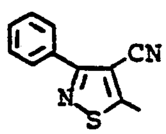 | $CH_3$ | $CH_3$ | blaustichig rot |
| 11 | 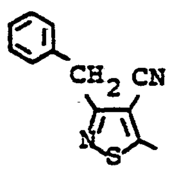 | $CH_3$ | $CH_3$ | blaustichig rot |
| 12 | 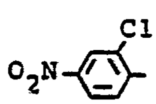 | $OCH_3$ | $CH_3$ | rubin |

| Beispiel Nr. | D | $T^1$ | $T^2$ | Färbung auf Polyester |
|---|---|---|---|---|
| 13 | 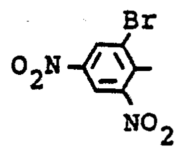 | $OCH_3$ | $CH_3$ | blauviolett |
| 14 | 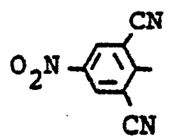 | $OCH_3$ | $CH_3$ | blau |
| 15 | 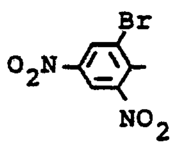 | $OCH_3$ | $OCH_3$ | blauviolett |
| 16 | 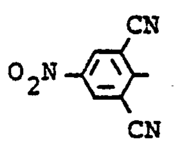 | $OCH_3$ | $OCH_3$ | blau |
| 17 | 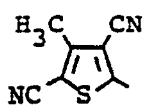 | $OCH_3$ | $OCH_3$ | blauviolett |
| 18 | 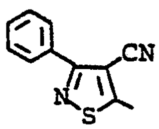 | $OCH_3$ | $OCH_3$ | rubin |
| 19 | 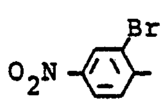 | H | $NHCOCH_3$ | rot |
| 20 | 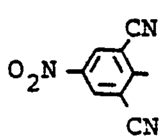 | H | $NHCOCH_3$ | blau |

| Beispiel Nr. | D | $T^1$ | $T^2$ | Färbung auf Polyester |
|---|---|---|---|---|
| 21 | 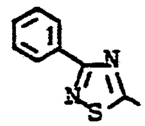 | H | $NHCOCH_3$ | rot |
| 22 | 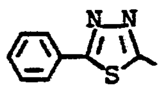 | H | $NHCOCH_3$ | rot |
| 23 | 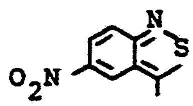 | H | $NHCOCH_3$ | marineblau |
| 24 | 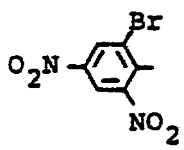 | $OCH_3$ | $NHCOCH_3$ | marineblau |
| 25 | 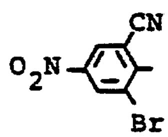 | $OCH_3$ | $NHCOCH_3$ | marineblau |
| 26 | 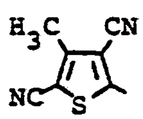 | $OCH_3$ | $NHCOCH_3$ | marineblau |
| 27 | 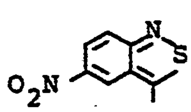 | $OCH_3$ | $NHCOCH_3$ | türkis |
| 28 | 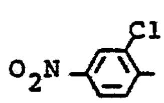 | H | $NHSO_2CH_3$ | rot |

| Beispiel Nr. | D | $T^1$ | $T^2$ | Färbung auf Polyester |
|---|---|---|---|---|
| 29 | 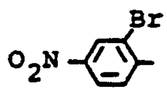 | H | $NHSO_2CH_3$ | rot |
| 30 | 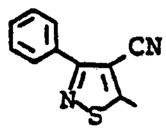 | H | $NHSO_2CH_3$ | blaustichig rot |
| 31 | 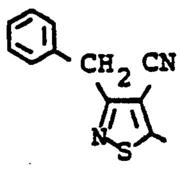 | H | $NHSO_2CH_3$ | blaustichig rot |
| 32 | 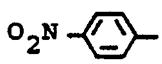 | $CH_3$ | $NHSO_2CH_3$ | scharlachrot |
| 33 | 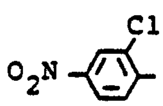 | $CH_3$ | $NHSO_2CH_3$ | rot |
| 34 | 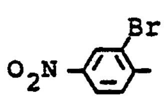 | $CH_3$ | $NHSO_2CH_3$ | rot |
| 35 | 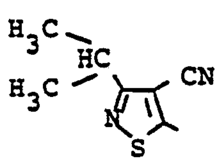 | $CH_3$ | $NHSO_2CH_3$ | blaustichig rot |
| 36 | 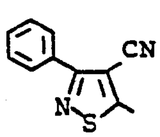 | $CH_3$ | $NHSO_2CH_3$ | blaustichig rot |

| Beispiel Nr. | D | $T^1$ | $T^2$ | Färbung auf Polyester |
|---|---|---|---|---|
| 37 | 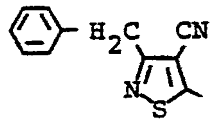 | $CH_3$ | $NHSO_2CH_3$ | blaustichig rot |
| 38 | 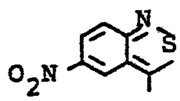 | $CH_3$ | $NHSO_2CH_3$ | blau |

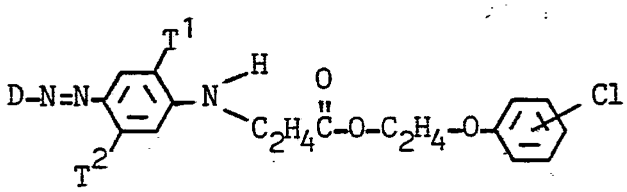 (o und p)

| Beispiel Nr. | D | $T^1$ | $T^2$ | Färbung auf Polyester |
|---|---|---|---|---|
| 39 | 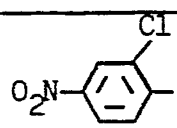 | H | $NHCOCH_3$ | rot |
| 40 | 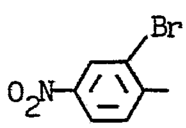 | H | $NHCOCH_3$ | rot |
| 41 | 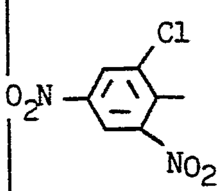 | $OCH_3$ | $NHCOCH_3$ | marineblau |
| 42 | 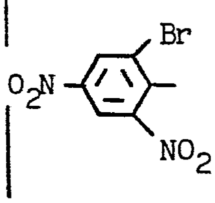 | $OCH_3$ | $NHCOCH_3$ | marineblau |

## Patentansprüche

1. Dispersionsfarbstoffe der allgemeinen Formel

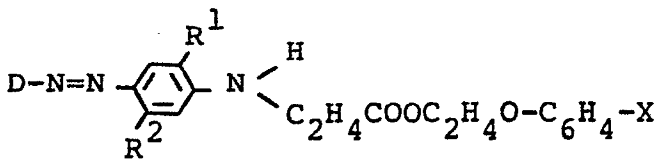

I,

in der
D der Rest einer Diazokomponente,
$R^1$ Wasserstoff, Methyl, Ethyl, Methoxy oder Ethoxy,
$R^2$ Wasserstoff, Chlor, Methyl, Methoxy, $NHSO_2$-$C_1$- bis -$C_4$-alkyl oder C-Acylamino und
X Wasserstoff, Methyl, Ethyl, Chlor, Brom oder Nitro sind.

2. Verbindungen gemäß Anspruch 1 der allgemeinen Formel

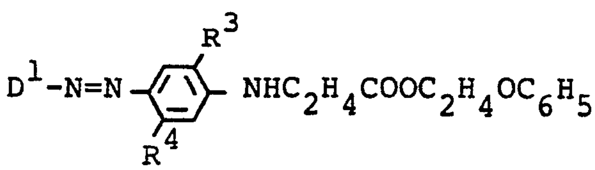

I a,

in der
$R^3$ Wasserstoff, Methyl, Methoxy oder Ethoxy,
$R^4$ Wasserstoff, Methyl, Methoxy, Chlor, Acetylamino oder Methylsulfonylamino und
$D^1$ ein Rest der Benzol-, Isothiazol-, Thiazol-, Thiadiazol-, Benzisothiazol- oder Thiophenreihe sind.

3. Verwendung der Verbindungen gemäß Anspruch 1 zum Färben synthetischer Polyester.

Europäisches Patentamt

# EUROPÄISCHER RECHERCHENBERICHT

0083009
Nummer der Anmeldung

EP 82 11 1518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 024 237 (EASTMAN KODAK) * Seite 1, Zeilen 15-55; Seite 3, Beispiel 23 * | 1-3 | C 09 B 29/08<br>C 09 B 31/043//<br>D 06 P 1/18<br>D 06 P 3/54 |
| A | DE-A-2 514 530 (I.C.I.) * Seite 3, Absatz 2; Seite 8, Beispiel 11; Seite 9, Beispiel 17 * | 1-3 | |
| A | GB-A-1 321 902 (I.C.I.) * Seite 1, Zeilen 10-54; Seite 7, Beispiel 33; Seite 8, Beispiel 34 * | 1-3 | |
| A | FR-A-2 305 471 (I.C.I.) * Seite 2, Formel; Seite 8, Beispiel 11 * | 1-3 | RECHERCHIERTE SACHGEBIETE (Int. Cl. 3)<br>C 09 B 29/00<br>C 09 B 31/00 |

Der vorliegende Recherchenbericht wurde für alle Patentansprüche erstellt.

| Recherchenort | Abschlußdatum der Recherche | Prüfer |
|---|---|---|
| DEN HAAG | 05-04-1983 | GREEN C.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument